(19) Europäisches Patentamt

European Patent Office

Office européen des brevets

(11) **EP 0 806 833 B1**

(12) **EUROPÄISCHE PATENTSCHRIFT**

(45) Veröffentlichungstag und Bekanntmachung des Hinweises auf die Patenterteilung:
**19.09.2001 Patentblatt 2001/38**

(51) Int Cl.[7]: **H02M 1/12**, H02M 3/335

(21) Anmeldenummer: **97106829.1**

(22) Anmeldetag: **24.04.1997**

(54) **Synchronisierbare Stromversorgung**

Synchronisable power supply

Alimentation de courant synchronisable

(84) Benannte Vertragsstaaten:
**DE FR GB IT**

(30) Priorität: **29.04.1996 DE 19617176**

(43) Veröffentlichungstag der Anmeldung:
**12.11.1997 Patentblatt 1997/46**

(73) Patentinhaber: **Infineon Technologies AG**
**81669 München (DE)**

(72) Erfinder: **Herfurth, Michael**
**82205 Gilching (DE)**

(74) Vertreter: **Zedlitz, Peter, Dipl.-Inf. et al**
**Patentanwalt,**
**Postfach 22 13 17**
**80503 München (DE)**

(56) Entgegenhaltungen:
**US-A- 5 436 550**      **US-A- 5 440 473**
**US-A- 5 515 257**

**Beschreibung**

Die Erfindung betrifft eine synchronisierbare Stromversorgung gemäß dem Oberbegriff des Anspruchs 1.

Stromversorgungen mit Power Factor Correction bestehen überwiegend aus einem PFC-Wandlerteil zur Power Factor Korrektur (PFC) und dem klassischen getakteten Wandler mit Transformation und Netztrennung. Neben anderen Steuerungsverfahren (z.B. Frequenzsteuerung) ist die Pulsweiten-Modulation (PWM) das am häufigsten eingesetzte Steuerungsverfahren für getaktete Stromversorgungen. Dabei wird eine rampenförmige Spannung mit üblicherweise konstanter Frequenz (Taktfrequenz) mit einer zweiten Spannung, der Stellgröße, verglichen. Die Stellgröße ändert ihren Wert üblicherweise langsam gegenüber der Taktfreqenz. Der Vergleich der beiden Spannungen mit einem Komparator führt zu einem rechteckförmigen Signal, bei dem mit konstanter Wiederholrate (1/T) das Verhältnis zwischen H-Pegel und L-Pegel durch Änderung der Stellgröße gesteuert werden kann. Wird nun dem H-Pegel die Einschaltdauer ($T_{EIN}$) eines Schalters und dem L-Pegel die Ausschaltdauer $T_{(AUS)}$ zugeordnet, so entsteht bei konstanter Taktfrequenz (1/T) ein Tastverhältnis

$$T_{EIN}/T \text{ mit } T= T_{EIN}+T_{AUS}.$$

Der Energiefluß vom Eingang zum Ausgang eines getakteten Wandlers wird durch das Tastverhältnis bestimmt.

Für eine Stromversorgung, die aus einem PFC-Wandlerteil und einem PWM-Wandlerteil besteht, liegt es nahe, beide Steuerteile in ihrer Betriebsfrequenz zu synchronisieren, um Überkopplungen oder gegenseitige Störbeeinflussung zu vermeiden.

Für den PFC-Wandlerteil muß das Tastverhältnis zwischen Null und 0,99 einstellbar sein, für den PWM-Wandlerteil zwischen Null und 0,5.

Bekannt sind integrierte Schaltungen, die in den Datenblättern zum Baustein TK 84819 der Fa. TOKO, zum Baustein LT1509 der Fa. Linear Technology und zum Baustein ML4824 der Fa. Micro Linear beschrieben sind.

Eine synchronisierbare Stromversorgung mit Power Factor Korrektur ist aus der US 5,440,473 bekannt. Dort ist ein AC-DC-Wandler mit einem PFC-Wandlerteil und einem PWM-Wandlerteil angegeben, die dieselbe Betriebsfrequenz aufweisen und die über eine Synchronisiereinrichtung in synchronisierter Betriebsweise zueinander betrieben werden.

Bei den bisher bekanntgewordenen Verfahren erzeugt ein Oszillator eine rampenförmige Spannung mit unsymmetrischen Flanken (z.B. 98% ansteigend und 2% fallend), die identisch mit der Taktfrequenz ist und die zur Pulsweiten-Modulation des PFC-Wandlerteils genutzt wird. Das verkürzte Tastverhältnis des PWM-Wandlerteils wird dadurch gewonnen, daß der mögliche Einschaltzeitpunkt des PWM-Wandlerteils um einen festgelegten Prozentansatz (z.B. 53%) des Oszillatortaktes verzögert wird. Dies kann z.B. durch einen Komparator, der die Rampenspannung des Oszillators mit einer definierten (den 53% des Tastverhältnisses entsprechenden) Schwelle vergleicht, realisiert werden.

Ein Merkmal dieses Verfahrens ist, daß eine Synchronisation des Oszillators nicht möglich ist, ohne Einfluß auf das reduzierte Tastverhältnis des PWM-Wandleteils zu nehmen.

Aufgabe der vorliegenden Erfindung ist es eine synchronisierbare Stromversorgung bereitzustellen, die diesen Nachteil nicht aufweist.

Diese Aufgabe wird durch den kennzeichnenden Teil des Anspruchs 1 gelöst. Weiterbildungen sind Kennzeichen der Unteransprüche.

Die Erfindung wird nachfolgend anhand von drei Figuren näher erläutert.

Es zeigen:

Figur 1 ein Blockschaltbild einer Stromversorgungseinheit gemäß der Erfindung mit integrierter Steuerschaltung mit Stromsteuerung,

Figur 2 ein Blockschaltbild einer Stromversorgungseinheit gemäß der Erfindung mit integrierter Steuerschaltung mit Spannungssteuerung, und

Figur 3 ein Blockschaltbild der in Figur 1 dargestellten integrierten Steuerschaltung.

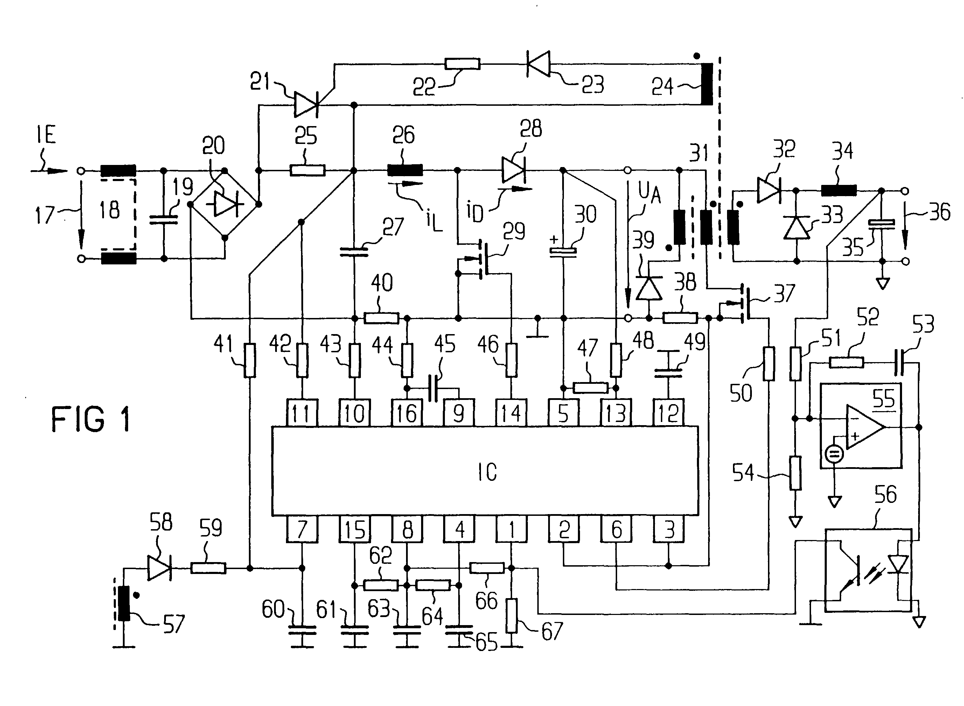

Das Schaltnetzgerät mit powerfactor-Korrektur gemäß Figur 1 ist in bekannter Weise aufgebaut und weist einen Eingang 17 mit nachgeschalteter Drossel 18, Kondensator 19 und Gleichrichter 20 aus. Der positive Pol des Gleichrichters 20 ist über einen Widerstand 25, eine Induktivität 26 eine Diode 28 mit einem Übertrager 31 verschaltet. Der negative Pol des Gleichrichters 20 ist über einen Widerstands 40 und eine Diode 39 mit einer Wicklung des Übertragers 31 und über den Widerstand 40 und einen MOSFET 37 mit einer zweiten Wicklung des Übertragers 31 verbunden. Zwischen dem Knotenpunkt der Reihenschaltung aus Widerstand 25 und Induktivität 26 und negativem Pol des Gleichrichters 20 ist eine Kapazität 27 geschaltet und nach der Induktivität 26 ein zweiter MOSFET 29 parallel zum Bezugspotential der Schaltung.

Der Ausgangskreis des Schaltnetzteils besteht aus den beiden Dioden 32 und 33 sowie der nachgeschalteten Spule 34 und dem Kondensator 35, die in bekannter Weise verschaltet sind. An den Klemmen 36 kann die Ausgangsspannung abgegriffen werden.

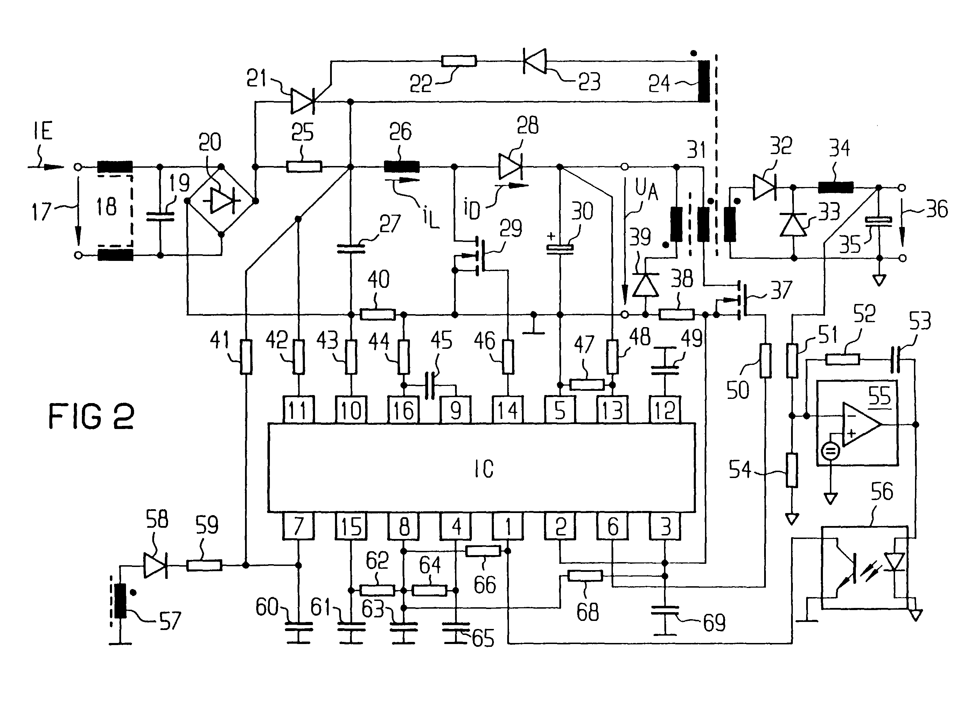

Die integrierte Steuerschaltung IC weist Anschlüsse 1 bis 16 auf die über jeweilige Widerstände 41 .. 44, 46 .. 48 sowie die Bauelemente 57 bis 67 mit dem Schaltnetzgerät über die in der Figur 1 bzw. 2 dargestellten Leitungen verbunden ist. Die Elemente 51 bis 56 bilden einen Rückkopplungszweig mit Optokoppler 56.

Die beiden Schaltungen gemäß Figur 1 und 2 unterscheiden sich lediglich in der Beschaltung der Anschlüsse 1 und 3, die festlegen ob eine Spannungssteuerung (Fig 2) oder eine Stromsteuerung (Fig 1) erfolgt.

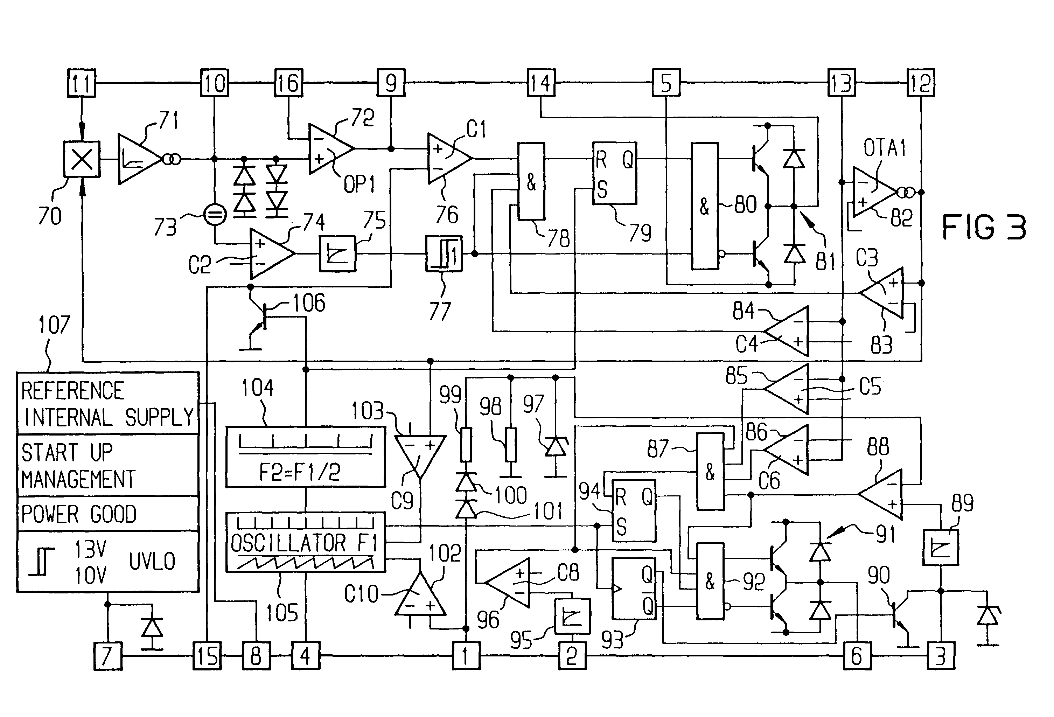

Figur 3 zeigt den prinzipiellen Aufbau des erfindungsgemäßen Steuerschaltkreises. An der Klemme 1 ist die Pulsweitenmodulations(PWM)-Steuerspannung anlegbar, welche normalerweise über den Optokoppler 56 bereitgestellt wird. Klemme 2 dient der PWM-Strombegrenzung. Klemme 3 ist der PWM-Stromfühlereingang, der im Strommodus einen Eingangsbereich von 0..1,5V hat und im Spannungsmodus einen Bereich von 0..6V. An Klemme 4 wird eine externe Kapazität mit dem Oszillator verbunden. Anschlußklemme 5 ist der Masseanschluß. Klemme 6 ist der Ausgang den PWM- Gatetreiber 37 und Klemme 7 der Anschluß für die Versorgungsspannung. An Klemme 8 ist eine interne Referenzspannung abgreifbar, die über die Widerstände 62, 64, 66 den Klemmen 1, 8 und 15 zugeführt wird. Klemme 9 ist ein Ausgang zur Kompensation der PFC-Stroms. Anschlußklemme 10 ist der Ausgang des Multiplizierers 70 und gleichzeitig der nicht invertierende Eingang für den Fehlerverstärker 72. Klemme 11 bildet den Eingang für den Multiplizierer 70. Klemme 12 ist der Ausgang für den PFC-Stromschleifenfehlerverstärker 82 für die Spannungskompensation und ist mit dem Sicherheitskomparator 83 führ fehlende Last verbunden. Klemme 13 ist der invertierende Eingang des Bus-Spannungsfehlerverstärker mit PFC überspannungskomparator 84, PWM-Überspannungskomparator 85 und PWM-Unterspannungskomparator 86. An Klemme 14 kann der Gateanschluß des PFC-Treibertransitors 29 angeschlossen werden. An Klemme 15 entsteht bei Beschaltung mit einem Kondensator gegen Masse und einem Widerstand nach Klemme 8 eine Rampenspannung zur Bildung des Tastverhältnisses für den PFC-Wandlerteil. Klemme 16 bildet den invertierenden Eingang des PFC-Fehlerstromverstärkers 72 zur Kompendsation.

Klemme 11 ist mit dem ersten Eingang des Multiplizierers 70 verbunden, dessen Ausgang über einen Spannungs/Stromwandler 71 mit der Klemme 10, dem nicht invertierenden Eingang des Operationsverstärkers 72 und über eine Spannungsquelle 73 mit dem nicht invertierenden Eingang eines weiteren Operationsverstärkers 74 verschaltet. Der Ausgang des Operationsverstärkers 72 ist mit dem nicht invertierenden Eingang eines Operationsverstärkers 76 und mit der Klemme 9 verschaltet. Der Ausgang des Operationsverstärkers 74 ist über ein Tiefpassfilter 75 und ein nachgeschaltetes Schmitt-Trigger 77 mit einem Eingang jeweils eines ersten und zweiten UND-Gatters verbunden. Ein weiterer Eingang des ersten UND-Gatters 78 ist mit dem Ausgang des Operationsverstärkers 76 verschaltet. Der Ausgang des UND-Gatters ist mit dem Rücksetzeingang eines Flip-Flops 79 verbunden, dessen Ausgang mit dem zeiten Eingang des UND-Gatters 80 verschaltet ist. Der Ausgang des UND-Gatters 80 ist über einen Treiber 81 mit der Ausgangsklemme 14 verschaltet und bildet den Steuerausgang für die PFC-Steuerung.

Die Ausgangsspannung am Kondensator 30 gemäß Figur 1 und 2 wird der Klemme 13 zugeführt. Diese ist jeweils mit dem invertierenden Eingang eines OTA 82 und zweier Operationsverstärker 84 und 85 sowie mit dem nicht invertierenden Eingang eines Operationsverstärkers 86 verschaltet. Der Ausgang des OTA ist mit der Klemme 12 und dem nicht invertierenden Eingang des Operationsverstärkers 83 und des Operationsverstärkers 103 sowie dem zweiten Eingang des Multiplizieres 70 verbunden. Der Ausgang des Operationsverstärkers 83 ist mit einem weiteren Eingang des UND-Gatters 78 verschaltet. Der Ausgang des Operationsverstärkers 84 ist mit noch einem Eingang des UND-Gatters 78 verbunden. Die Ausgänge der Operationsverstärker 85 und 86 sind mit jeweiligen Eingängen eines UND-Gatters 87 verschaltet. Der an die Klemme 15 anschließbare Kondensator 61 dient zur Erzeugung der Rampenspannung für das PFC-Tastverhältnis. Klemme 15 ist mit dem Kollektor eines Transistors 106 und dem invertierenden Eingang des Operationsverstärkers 76 verschaltet. Der Emitter des Transistors 106 ist mit Masse und die Basis mit dem Ausgang des Frequenzteilers 104 sowie dem Setz-Eingang des Flip-Flops 79 verbunden. Der Eingang des Frequenzteilers 104 ist mit einem Ausgang des Oszillators 105 verbunden. Über Anschluß 4 wird ein externer Kondensator 65 gegen Masse geschaltet und Anschluß 4 wird über einen Widerstand 64 mit der internen Referenzspannung aus Block 107 verbunden. Der Oszillator 105 weist zwei Steuereingänge auf, die jeweils mit den Ausgängen der Operationsverstärker 103 und 102 verschaltet sind. Ein weiterer Ausgang des Oszillators ist mit dem Setz-Eingang und dem Eingang zweier Flip-Flops 94 und 93 verknüpft. Der Rücksetz-Eingang des Flip-Flops 94 ist mit dem Ausgang des UND-Gatters 87 verbunden. Der Ausgang des Flip-Flops 94 ist mit einem Eingang eines UND-Gatters 92 verschaltet. Der invertierende Ausgang des Flip-Flops 93 ist mit einem dritten Eingang des UND-Gatters 92 verschaltet und der vierte Eingang des UND-Gatters 92 ist mit einem Eingang des UND-Gatters 87 und dem Ausgang des Operationsverstärkers 88 verbunden. Der Ausgang des UND-Gatters 92 ist über den Treiber 91 mit der Anschlußklemme 6 verbunden und dient zur PWM-Steuerung.

Die Klemme 2 ist über ein Tiefpaßfilter 95 mit dem invertierenden Eingang des Operationsverstärker 96 verbunden, dessen Ausgang mit einem Eingang des UND-Gatters 87 und einem Eingang des UND-Gatters 92 verschaltet ist. Klemme 1 ist mit dem nicht invertierenden Eingang des Operationsverstärkers 102 und über eine Reihenschaltung aus zwei Dioden 100, 101 und einen Widerstand 99 mit dem nicht invertierenden Eingang des Operationsverstärkers 88 verschaltet. Des weiteren ist der nicht invertierende Eingang des Operationsverstärkers 88 über einen Widerstand 98 sowie eine parallelgeschaltete Zenerdiode 97 in Sperrrichtung mit Masse verbunden. Der Ausgang des Flip-Flops 93 ist mit der Basis eines weiteren Transistors 90 verbunden, dessen Emitter mit Masse und dessen Kollektor mit der Klemme 3 sowie dem Eingang eines Tiefpaßfilters 89 verbunden ist. Der Ausgang des Filters 89 ist mit dem invertierenden Eingang des Operationsverstärkers 88 verschaltet. Die nicht benannten Eingänge der Operationsverstärker 74, 82, 83 84, 85, 86, 96, 102 und 103 sind mit intern erzeugten Referenzspannungen beaufschlagt.

Erfindungswesentlich ist, daß die Stromversorgung mit Power Factor Korrektur einen PFC-Wandlerteil in synchronisierter Betriebsweise mit einem PWM-Wandlerteil aufweist. Der Ausgang des PFC-Wandlerteils bildet die Treiberstufe 81 und den des PWM-Wandlerteils die Treiberstufe 91. Beide Wandlerteile werden mit derselben Betriebfrequenz und einem maximalen Tastverhältnis beim PFC-Wandlerteil von 99% und beim PWM-Wandlerteil von 50% betrieben und der Oszillator oder ein von außen zugeführtes Synchronisierungssignal arbeitet mit einer gegenüber der Betriebsfrequenz mindestens doppelt so großen Frequenz. Die Begrenzung des Tastverhältnisses erfolgt für den PWM-Wandlerteil auf höchstens 50% z.B. mittels eines Teiler-Flipflops.

Weiterhin werden beide Wandlerteile mit unterschiedlicher, aber einer ganzzahlig vielfachen Betriebsfrequenz des anderen Wandlerteils betrieben, insbesondere wird der PWM-Wandlerteil mit der doppelten Betriebsfrequenz des PFC-Wandlerteils betrieben und das maximale Tastverhältnis des PFC-Wandlerteils kann bis zu 99% seiner Taktperiode betragen und das maximale Tastverhältnis des PWM-Wandlerteils bis zu 50% seiner Taktperiode, wobei die Begrenzung des Tastverhältnisses durch digitale Teiler und ein Teiler-Flipflop erfolgt.

Dem Oszillator wird in einer Weiterbildung ständig oder nur zeitweise ein Synchronisierungssignal überlagert.

Damit der Oszillator 105 auch durch ein externes Signal synchronisiert werden kann, wird der Oszillator 105 erfindungsgemäß ausschließlich dazu genutzt, eine Taktfrequenz F1 zu erzeugen. Damit das Tastverhältnis des PWM-Wandlerteils auf 50% begrenzt bleibt, wird die Oszillatorfrequenz mit einem Flipflop 93 geteilt. Mit der halbierten Taktfrequenz F2 wird die Spannungsrampe für den PFC-Wandlerteil zurückgesetzt. Das aus dem Teiler-Flipflop 93 gewonnene Signal verriegelt den PWM-Wandlerteil über jede zweite Periode der Taktfrequenz F1 entsprechend einer Halbperiode der Taktfrequenz F2.

Wenn also die Oszillatorfrequenz doppelt so groß wie die Betriebsfrequenz der beiden Wandlerteile gewählt wird, kann durch ein Teiler-Flipflop sichergestellt werden, daß das Tastverhältnis des PWM-Wandlerteils auf 50% begrenzt bleibt. Dies gilt auch dann noch, wenn die Oszillatorfrequenz z.B. infolge einer Synchronisation (langsam) geändert wird.

Die Phasenlage der beiden Rampenspannungen für den PFC-Wandlerteil und für den PWM-Wandlerteil kann prinzipbedingt beliebig zugeordnet werden. Zur Vermeidung gegenseitiger Störbeeinflussung wird aber eine Betriebsweise bevorzugt, bei der die Einschaltflanke des PWM-Wandlerteils gegenüber der Einschaltflanke des PFC-Wandlerteils (Leading Edge) um 50% der Periodendauer verzögert (Trailing Edge) auftritt.

**Patentansprüche**

1. Stromversorgung mit Power Factor Korrektur mit einem PFC-Wandlerteil (26, 28, 29, 30, 40) und einem PWM-Wandlerteil (31-38), die dieselbe Betriebsfrequenz aufweisen und die in synchronisierter Betriebsweise zueinander betrieben werden, **dadurch gekennzeichnet, daß** das PFC-Wandlerteil (26, 28, 29, 30, 40) bei einem maximalen Tastverhältnis von 99% und das PWM-Wandlerteil (31-38) bei einem maximalen Tastverhältnis von 50% betrieben werden und daß ein Oszillator (105) oder ein von außen zugeführtes Synchronisierungssignal mit einer gegenüber der Betriebsfrequenz mindestens doppelt so großen Frequenz arbeitet.

2. Stromversorgung nach Anspruch 1, **dadurch gekennzeichnet, daß** die Begrenzung des Tastverhältnisses für den PWM-Wandlerteil (31-38) auf höchstens 50% durch ein Teiler Flipflop erfolgt.

3. Stromversorgung nach Anspruch 1 oder 2, **dadurch gekennzeichnet, daß** beide Wandlerteile mit unterschiedlicher, aber einer gangzzahlig vielfachen Betriebsfrequenz des anderen Wandlerteils betrieben werden, insbesondere daß der PWM-Wandlerteil (31-38) mit der doppelten Betriebsfrequenz des PFC-Wandlerteils (26, 28, 29, 30, 40) betrieben wird und daß das maximale Tastverhältnis des PFC-Wandlerteils (26, 28, 29, 30, 40) bis zu 99% seiner Taktperiode betragen kann und das maximale Tastverhältnis des PWM-Wanderteils (31-38) bis zu 50% seiner Taktperiode, wobei die Begrenzung des Tastverhältnisses durch digitale Teiler und ein Teiler-Flipflop erfolgt.

4. Stromversorgung nach einem der vorhergehenden Ansprüche, **dadurch gekennzeichnet, daß** dem Oszillator (105) ständig oder nur zeitweise ein Synchronisierungssignal überlagert wird.

5. Stromversorgung nach einem der vorhergehenden Ansprüche, **dadurch gekennzeichnet, daß** die Einschaltflanke des PWM-Wandlerteils (31-38) gegenüber dem PFC-Wandlerteil (26, 28, 29, 30, 40) um 50% der Periodendauer des PWM-Wandlerteils (31-38) nacheilt.

## Claims

1. Power supply with power factor correction having a PFC converter section (26, 28, 29, 30, 40) and a PWM converter section (31-38) which have the same operating frequency and are operated in a synchronized mode of operation with respect to one another, **characterized in that** the PFC converter section (26, 28, 29, 30, 40) is operated at a maximum duty ratio of 99% and the PWM converter section (31-38) is operated at a maximum duty ratio of 50%, and in that an oscillator (105) or a synchronization signal fed in externally operates with a frequency that is at least twice as high as the operating frequency.

2. Power supply according to Claim 1, **characterized in that** the duty ratio for the PWM converter section (31-38) is limited to at most 50% by a divider flip-flop.

3. Power supply according to Claim 1 or 2, **characterized in that** both converter sections are operated with a different operating frequency, but one that is an integer multiple of the operating frequency of the other converter section, in particular in that the PWM converter section (31-38) is operated with twice the operating frequency of the PFC converter section (26, 28, 29, 30, 40), and in that the maximum duty ratio of the PFC converter section (26, 28, 29, 30, 40) may be up to 99% of its clock period and the maximum duty ratio of the PWM converter section (31-38) up to 50% of its clock period, the duty ratio being limited by digital dividers and a divider flip-flop.

4. Power supply according to one of the preceding claims, **characterized in that** a synchronization signal is superposed on the oscillator (105) continuously or only occasionally.

5. Power supply according to one of the preceding claims, **characterized in that** the switch-on edge of the PWM converter section (31-38) lags behind the PFC converter section (26, 28, 29, 30, 40) by 50% of the period of the PWM converter section (31-38).

## Revendications

1. Alimentation en courant à correction du Power Factor (facteur de puissance), avec une partie transformateur PFC (26, 28, 29, 30, 40) et une partie transformateur PWM (31-38), qui ont la même fréquence de service et qui sont exploitées en mode synchronisé l'une par rapport à l'autre, **caractérisée par** le fait que la partie transformateur PFC (26, 28, 29, 30, 40) est exploitée avec un taux maximum d'impulsion de 99 % et la partie transformateur PWM (31-38) avec un taux maximum d'impulsion de 50 % et qu'un oscillateur (105) ou un signal de synchronisation amené de l'extérieur travaillent avec un fréquence au moins double par rapport à la fréquence de service.

2. Alimentation en courant selon la revendication 1 **caractérisée par** le fait que la limitation du taux d'impulsion pour la partie transformateur PWM (31-38), à au plus 50 %, est effectuée par une bascule diviseuse bistable.

3. Alimentation en courant selon la revendication 1 ou 2 **caractérisée par** le fait que les deux parties transformateurs sont exploitées avec chacune avec une fréquence de service différente, mais égale à un multiple entier de celle de l'autre partie transformateur, en particulier par le fait que la partie transformateur PWM (31-38) travaille avec la fréquence double de celle de la partie transformateur PFC (26, 28, 29, 30, 40) et par le fait que le taux d'impulsion maximum de la partie transformateur PFC (26, 28, 29, 30, 40) peut s'élever jusqu'à 99 % de sa période de cadence et le taux d'impulsion maximum de la partie transformateur PWM (31-38) jusqu'à 50 % de sa période de cadence, la limitation du taux d'impulsion se faisant par diviseurs numériques et par une bascule diviseuse bistable.

4. Alimentation en courant selon l'une des revendications précédentes **caractérisée par** le fait qu'un signal de synchronisation est superposé en permanence ou partiellement à l'oscillateur (105).

5. Alimentation en courant selon l'une des revendications précédentes **caractérisée par** le fait que le flanc d'enclenchement de la partie transformateur PWM (31-38) est en retard de 50 % de la durée de période de la partis transformateur PWM (31-38) par rapport à la partie transformateur PFC (26, 28, 29, 30, 40).

FIG 1

EP 0 806 833 B1

FIG 2

FIG 3